# EUROPEAN PATENT APPLICATION

(11) **EP 3 637 110 A1**
(43) Date of publication of application: **15.04.2020**
(21) Application number: 19196684.5
(22) Date of filing: 11.09.2019
(51) Int. Cl.: G01P 5/16, F16L 41/03, G01F 25/00, G01P 21/02

(54) **FLUID DISTRIBUTION MANIFOLD AND A METHOD FOR MANUFACTURING THE SAME**

(30) Priority: 11.10.2018 US 201816157659
(71) Applicant: General Electric Company, Schenectady, NY 12345 (US)
(72) Inventor: Shivanathan, Sivaruban, Cincinnati, OH 45215 (US); Waymeyer, Stephen Joseph, Cincinnati, OH Ohio 45215 (US)
(74) Representative: Hafner & Kohl Patent- und Rechtsanwälte Partnerschaft mbB

(57) **Abstract**

An additively manufactured fluid distribution manifold and a method of manufacturing the same are provided. The fluid distribution manifold includes a manifold body defining a plurality of internal passages that may extend through an insulation layer that extends at least partially around the manifold body. The insulation layer includes an external wall and an insulated wall separated by a gap, and the external wall may define a flat surface for receiving a heating element. The fluid distribution manifold may be part of a pitot static test module for testing pitot static tubes in low temperature environments.

## Description

### FIELD

The present subject matter relates generally to fluid distribution manifolds, and more particularly, to additively manufactured fluid distribution manifolds including internal passages and insulating airgaps for use in low temperature environments.

### BACKGROUND

Pitot tubes are pressure measurement devices that are used to measure a velocity of a flow of fluid. In general, a pitot tube is a slender tube that defines at least two holes, one for measuring the stagnation pressure and the other for measuring the static pressure, which may be used to determine a flow velocity. Notably, a pitot tube failure or erroneous readings can result in dangerous conditions in certain applications. Therefore, pitot tube and pitot static systems must be frequently tested, calibrated, or otherwise monitored to ensure proper operation.

Pitot static test modules are typically used for testing and calibrating pitot tubes or pitot static systems. These pitot static test modules are often housed in a portable box or housing that may be carried to the pitot static system for testing. In this regard, pitot static test modules may frequently be exposed to very low temperatures, which may lead to ice build-up and faulty calibrations. For example, the internal passages of a fluid distribution manifold may become clogged or restricted, thereby preventing the desired flow rates and pressure of test air and compromising the resulting measurements.

Accordingly, a pitot static test module with features for improved operation in cold environments would be useful. More specifically, an additively manufactured fluid distribution manifold for insulating sensitive internal passages of the pitot static test module and other features for improved cold weather module operation would be particularly beneficial.

### BRIEF DESCRIPTION

Aspects and advantages of the invention will be set forth in part in the following description, or may be obvious from the description, or may be learned through practice of the invention.

In one exemplary embodiment of the present disclosure, an additively manufactured fluid distribution manifold is provided including a manifold body defining a plurality of internal passages and an insulation layer extending at least partially around the manifold body. The insulation layer includes an external wall and an insulated wall separated by a gap, wherein at least one of the internal passages extends through the insulation layer.

In another exemplary aspect of the present disclosure, a method of manufacturing a fluid distribution manifold is provided. The method includes depositing a layer of additive material on a bed of an additive manufacturing machine and selectively directing energy from an energy source onto the layer of additive material to fuse a portion of the additive material and form the fluid distribution manifold. The fluid distribution manifold includes a manifold body defining a plurality of internal passages and an insulation layer extending at least partially around the manifold body. The insulation layer includes an external wall and an insulated wall separated by a gap, wherein at least one of the internal passages extends through the insulation layer.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 is a perspective view of a pitot static test module according to an exemplary embodiment of the present subject matter.
FIG. 2 is a perspective view of the exemplary pitot static test module of FIG. 1 with a top cover removed to reveal a fluid distribution manifold according to an exemplary embodiment of the present subject matter.
FIG. 3 is a bottom perspective view of the exemplary fluid distribution manifold of FIG. 2 according to an exemplary embodiment of the present subject matter.
FIG. 4 is a top perspective view of the exemplary fluid distribution manifold of FIG. 2 according to an exemplary embodiment of the present subject matter.
FIG. 5 is a cross sectional view of the exemplary fluid distribution manifold of FIG. 2 according to an exemplary embodiment of the present subject matter.
FIG. 6 is another cross sectional view of the exemplary fluid distribution manifold of FIG. 2 according to an exemplary embodiment of the present subject matter.
FIG. 7 is another cross sectional view of the exemplary fluid distribution manifold of FIG. 2 according to an exemplary embodiment of the present subject matter.
FIG. 8 is a bottom perspective view of a fluid distribution manifold according to another exemplary embodiment of the present subject matter.
FIG. 9 is a bottom perspective view of a fluid distribution manifold according to another exemplary embodiment of the present subject matter.
FIG. 10 is a method of manufacturing a fluid distribution manifold according to an exemplary embodiment of the present subject matter.

Repeat use of reference characters in the present specification and drawings is intended to represent the same or analogous features or elements of the present invention.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, terms of approximation, such as "approximately," "substantially," or "about," refer to being within a ten percent margin of error. In addition, it should be appreciated that "fluid" may be used herein to refer to any gas, liquid, or some combination thereof.

The present disclosure is generally directed to an additively manufactured fluid distribution manifold and a method of manufacturing the same. The fluid distribution manifold includes a manifold body defining a plurality of internal passages that may extend through an external insulation layer that extends at least partially around the manifold body. The external insulation layer includes an external wall and an insulated wall separated by an airgap, and the external wall may define a flat surface for receiving a heating element. The fluid distribution manifold may be part of a pitot static test module for testing pitot static tubes and/or systems in low temperature environments.

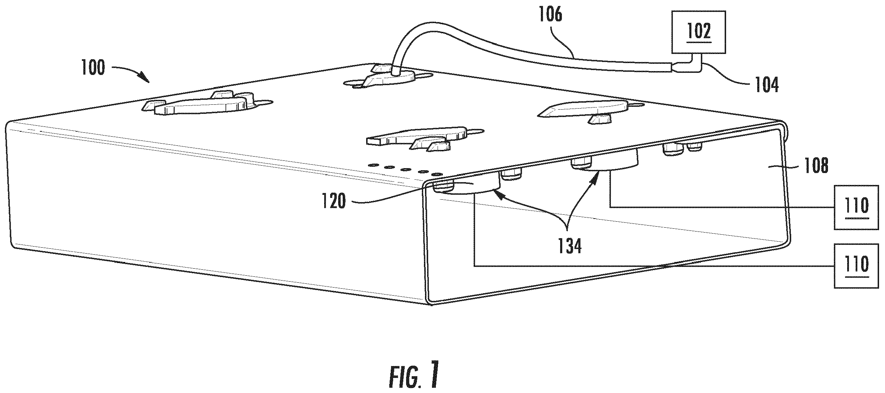

Referring now to the drawings, FIG. 1 is a perspective view of a pitot static test module 100 in accordance with an exemplary embodiment of the present disclosure. As illustrated schematically in FIG. 1, pitot static test module 100 is generally a portable module which may be operably coupled to a mobile pitot static test system 102. More specifically, as illustrated, pitot static test module 100 may be fluidly coupled to one or more pitot tubes 104 on pitot static test system 102, e.g., via fluid conduits or tubes 106. As illustrated, various components of pitot static test module 100 may be positioned within a housing 108 which may be positioned in a portable carrying case (not shown) and may include a control panel and all necessary control electronics.

As illustrated, pitot static test module 100 further includes a plurality of sensing devices 110 opening into the housing for a variety of purposes. For example, sensing devices 110 may be control valves for regulating fluid flow within a fluid distribution manifold 120, pressure transducers for monitoring pressures, compressors for receiving a flow of fluid, or any other suitable mechanism or device. According to an exemplary embodiment, pitot static test module 100, or more specifically, sensing devices 110, may include one or more pumps or compressors (not shown) for pumping air or another suitable test fluid through fluid conduits 106 to pitot tubes 104. For example, the fluid may be gas, liquid, or some combination thereof, such as nitrogen gas, oil, air, etc. By regulating the flow of air in a known manner, pitot tubes 104 may be calibrated or checked for accuracy.

In general, fluid distribution manifold 120 defines a plurality of internal passages 122 which provide fluid communication between one or more compressors, sensing devices 110, pitot tubes 104, or any other suitable component or subsystem of pitot static test module 100 or pitot static test system 102. Fluid distribution manifold 120 will be described in more detail below.

It should be appreciated that the exemplary pitot static test module 100 depicted in FIG. 1 is by way of example only and that in other exemplary embodiments, pitot static test module 100 may have any other suitable configuration. For example, it should be appreciated that in other exemplary embodiments, pitot static test module 100 may have any other suitable configuration of sensors, compressors, transducers, or control electronics. In addition, fluid distribution manifold 120 may have any other suitable size, shape, configuration of internal fluid passages, etc.

In general, the exemplary embodiments of fluid distribution manifold 120 described herein may be manufactured or formed using any suitable process. However, in accordance with several aspects of the present subject matter, fluid distribution manifold 120 may be formed using an additive manufacturing process, such as a 3-D printing process. The use of such a process may allow fluid distribution manifold 120 to be formed integrally, as a single monolithic component, or as any suitable number of sub-components. In particular, the manufacturing process may allow fluid distribution manifold 120 to be integrally formed and include a variety of features not possible when using prior manufacturing methods. For example, the additive manufacturing methods described herein enable the manufacture of fluid distribution manifolds having any suitable size and shape with multiple internal passageways and various features defined within these fluid passageways which were not possible using prior manufacturing methods. Some of these novel features are described herein.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present invention may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

In addition to using a direct metal laser sintering (DMLS) or direct metal laser melting (DMLM) process where an energy source is used to selectively sinter or melt portions of a layer of powder, it should be appreciated that according to alternative embodiments, the additive manufacturing process may be a "binder jetting" process. In this regard, binder jetting involves successively depositing layers of additive powder in a similar manner as described above. However, instead of using an energy source to generate an energy beam to selectively melt or fuse the additive powders, binder jetting involves selectively depositing a liquid binding agent onto each layer of powder. The liquid binding agent may be, for example, a photo-curable polymer or another liquid bonding agent. Other suitable additive manufacturing methods and variants are intended to be within the scope of the present subject matter.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, iron, iron alloys, stainless steel, and nickel or cobalt based superalloys (e.g., those available under the name Inconel® available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The plurality of successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as need depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways and internal insulating airgaps. In addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved performance and reliability.

As described briefly above, pitot static test module 100 may frequently be used in very cold environments. In order to prevent ice from forming within and restricting internal passages 122 or otherwise compromising the accuracy of pitot static test module 100, it is desirable to maintain fluid distribution manifold 120 at a suitably high temperature. In this regard, exemplary embodiments of fluid distribution manifold 120 described herein include features for heating and/or insulating sensitive components of pitot static test module 100. Although these features are described with respect to a pitot static test module, it should be appreciated that aspects of the present subject matter may be used to heat any suitable fluid distribution manifold for use in any suitable application. The exemplary embodiments described herein are not intended to limit the scope of subject matter in any manner.

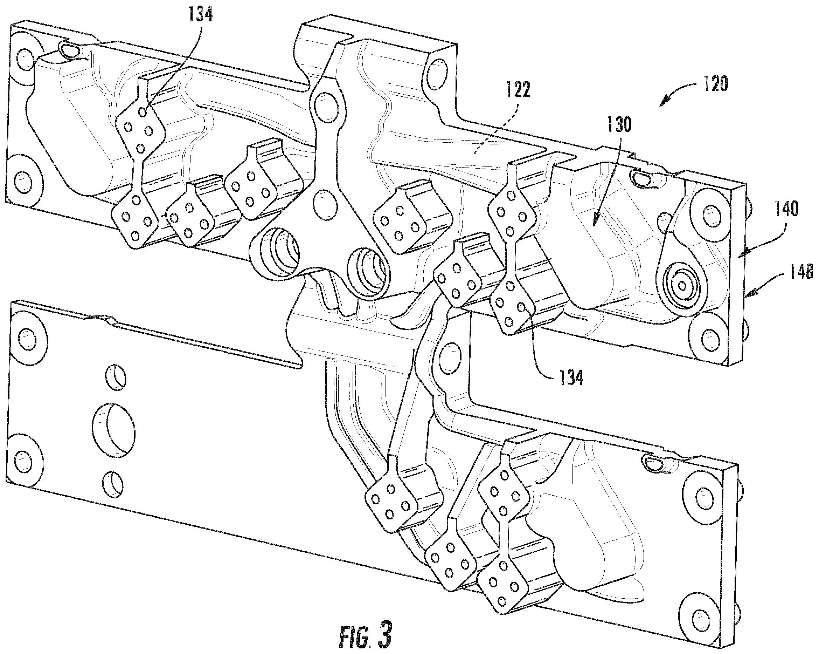

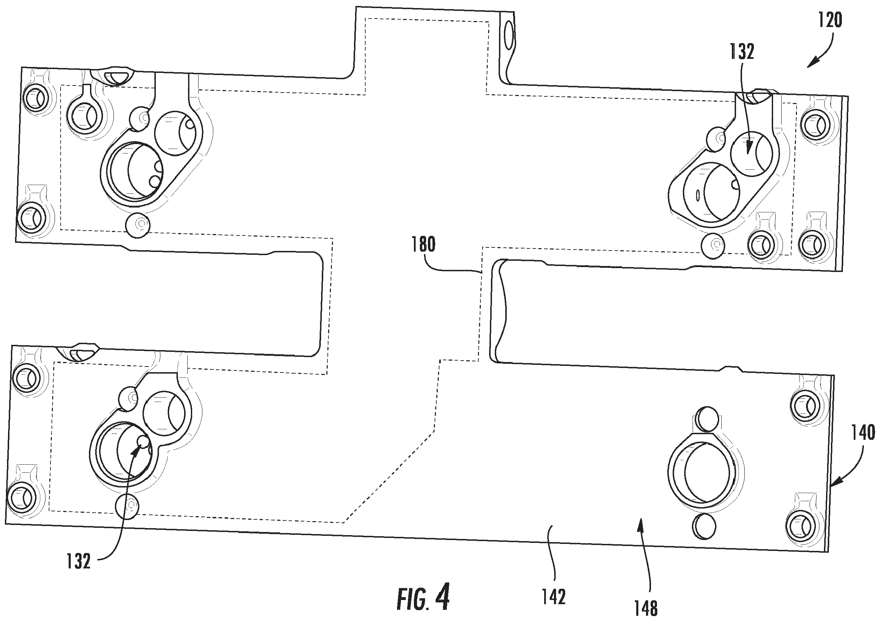

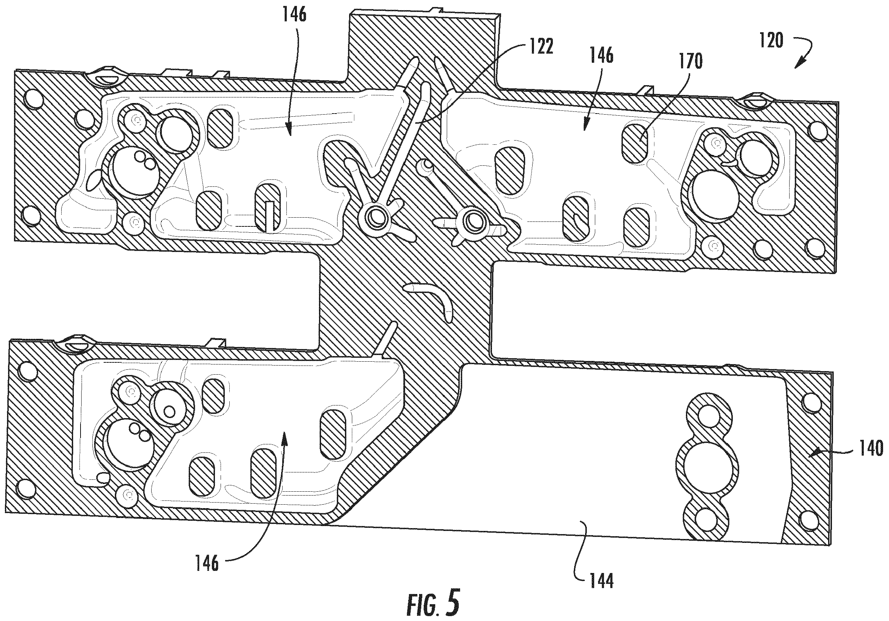

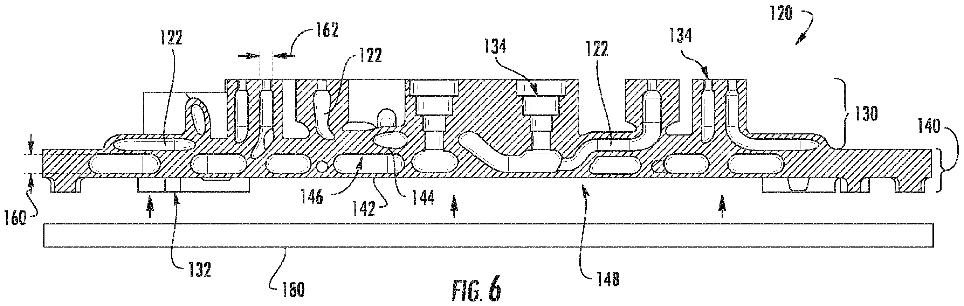

Referring now to FIGS. 3 through 7, fluid distribution manifold 120 will be described according to an exemplary embodiment of the present subject matter. In particular, FIGS. 3 and 4 illustrate partial perspective views of fluid distribution manifold 120 and FIGS. 5 through 7 illustrate cross sectional views of fluid distribution manifold 120 according to an exemplary embodiment.

As illustrated, fluid distribution manifold 120 generally includes a manifold body 130 which defines a plurality of internal passages 122. These internal passages 122 generally extend across or through manifold body 130 to provide fluid communication between two locations or ports. For example, one internal passage 122 may extend between an internal compressor (not shown), a sensing port 132 which is configured for receiving pitot tube 104 and/or fluid conduit 106 which is fluidly coupled to pitot tube 104, and/or a control port 134 which may be coupled to sensing devices 110. By contrast, for example, internal passages 122 may be fluidly coupled to internal sensing devices 110 for monitoring air pressures within fluid distribution manifold 120.

Referring now specifically to FIG. 3, a bottom perspective view of manifold body 130 is shown. As illustrated, manifold body 130 may define a plurality of inlets and outlets to internal passages 122. These ports are referred to herein and identified in FIG. 3 as control ports 134. Each control port 134 may be in fluid communication with at least one internal passage 122 and may be fluidly coupled to sensing devices 110, one or more compressors (not shown), other internal passages 122, or to any other suitable component of pitot static test module 100 or pitot static test system 102. In general, control ports 134 are positioned on an interior portion of housing 108, e.g., such that they substantially enclosed.

FIG. 4 provides a top perspective view of fluid distribution manifold 120. More specifically, as illustrated, fluid distribution manifold 120 defines a plurality of sensing ports 132 on a top surface, e.g., which may be exposed to an outdoor environment. Although four sensing ports 132 are illustrated, it should be appreciated that any other suitable number, size, and configuration of sensing ports 132 may be defined according to alternative embodiments. In general, each sensing port 132 is in fluid communication with at least one internal passage 122 and may be configured for receiving pitot static tube 104 and/or fluid conduit 106.

Referring now also to FIGS. 5 through 7, fluid distribution manifold 120 further includes an external insulation layer 140 that extends at least partially around manifold body 130. In general, external insulation layer 140 is configured for insulating manifold body 130 and/or internal passages 122 defined therethrough. For example, external insulation layer 140 may include an external wall 142 and an insulated wall 144 separated by an airgap 146. Although external insulation layer 140 is defined herein as including an "airgap," it should be appreciated that this may be any gap, void, plenum, or space for receiving any suitable fluid for insulating fluid distribution manifold 120.

As illustrated, insulated wall 144 is generally positioned between airgap 146 and manifold body 130. By contrast, as best shown in FIG. 4, external wall 142 defines a substantially flat surface 148 that faces housing 108 or the environment, e.g., outside pitot static test module 100. Although external insulation layer 140 is illustrated herein, it should be appreciated that aspects of the present subject matter may be used to form an insulation layer positioned at any suitable location within a manifold. In addition, fluid distribution manifold 120 may include multiple insulation layer positioned and configured in any suitable manner for improving thermal insulation.

According to the illustrated embodiment, manifold body 130 and external insulation layer 140 define a substantially rectangular cross-section, with the external insulation layer 140 being stacked adjacent manifold body 130. However, it should be appreciated that according to alternative embodiments external insulation layer 140 may be curved around manifold body 130, or may define any other suitable external shape. In addition, internal passages 122 may extend both through manifold body 130 and through external insulation layer 140, e.g., from control ports 134 positioned within an enclosed portion of housing 108 to sensing ports 132 which are exposed for ease of access. For example, according to one exemplary embodiment, internal passages may extend along the external insulation layer 140, e.g., within the same plane as airgap 146 or laterally within external insulation layer 140.

In general, the size and cross-sectional profile of internal passages 122 and airgap 146 may be defined in any suitable manner for a given application. In this regard, the additive manufacturing techniques described herein provide designers wide design flexibility and few manufacturing limitations regarding the size and shape these features. However, according to the illustrated embodiment, airgap 146 defines an airgap thickness 160 and internal passages 120 to define a passage thickness 162. Generally speaking, airgap thickness 160 may be substantially equivalent to passage thickness 162. However, according to alternative embodiments, airgap thickness 160 may be larger than passage thickness 162. Indeed, airgap thickness 160 may be defined as large as necessary for providing the desired insulation properties to fluid distribution manifold 120 and internal passages 122 may be sized as necessary to achieve desired flow rates for a given application.

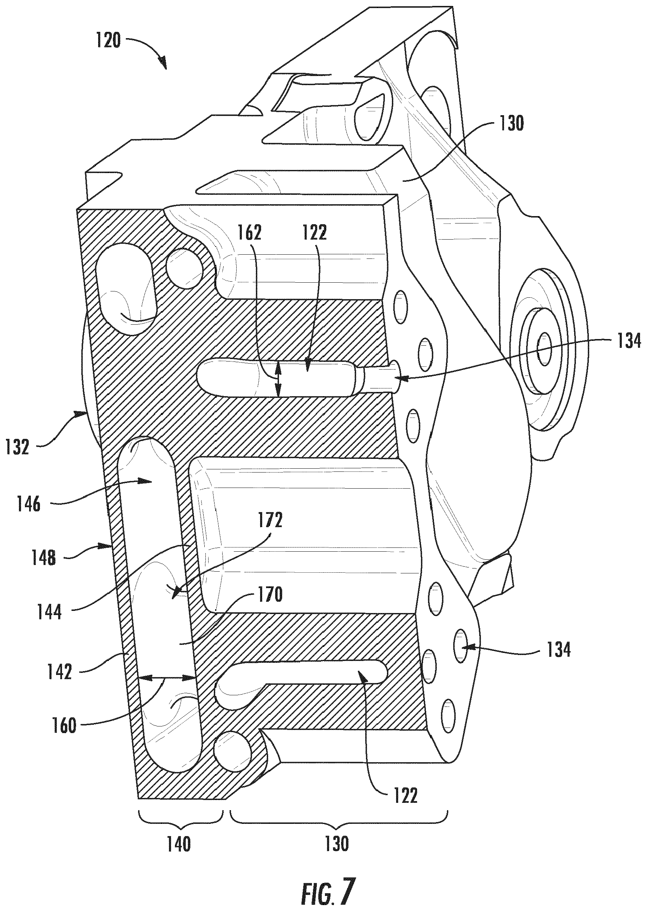

As best shown in FIG. 7, fluid distribution manifold 120 may further include a plurality of passage walls 170 which generally extend through airgap 146 and define a portion of at least one internal passage 122. For example, as illustrated, passage walls 170 extend between external wall 142 and insulated wall 144 and may define a fillet 172 where passage wall 170 joins walls 142, 144. Fillet 172 may formed to reduce joint stress concentrations, ensure the rigidity of fluid distribution manifold 120, etc.

Referring again to FIGS. 4 through 6, pitot static test module 100 may further include a heating element 180 that is thermally coupled with fluid distribution manifold 120, e.g., to provide heat and reduce the likelihood of ice build-up. For example, according to the illustrated embodiment, the heating element 180 is a heating pad that is shaped to heat only those regions of fluid distribution manifold 120 where internal passages 122 are defined. In addition, according to the illustrated embodiment, the heating element 180 is positioned between external wall 142 and manifold housing 108. As described briefly above, external wall 142 may define flat surface 148 which is configured for receiving and providing good thermal coupling with heating element 180.

In this manner, when pitot static test module 100 is used in an environment where temperatures are below freezing, heating element 180 may be activated to heat fluid distribution manifold 120. Because fluid distribution manifold 120 is integrally formed from a single piece of a material with high thermal conductivity, such as aluminum, fluid distribution manifold 120 is quickly and completely heated. In addition, insulating airgap 146 may provide a conductive thermal break from the cold environment to further prevent components of pitot static test module 100 from experiencing unsuitably low temperatures. Insulation barrier help prevent the energy being wasted to environment and improved durability.

In general, fluid distribution manifold 120 as described herein may be additively manufactured as a single, integral piece. More specifically, manifold body 130, external insulation layer 140, and other components of fluid distribution manifold 120 or other components of pitot static test module 100 may all be integrally formed in a single manufacturing process. In addition, fluid distribution manifold 120 may be formed of materials particularly suitable for heating quickly and reducing the likelihood of ice build-up. For example, fluid distribution manifold 120 may be formed as a single, integral piece of aluminum having internal passages, airgaps, connection ports, and other features defined therein. Fluid distribution manifold 120 may further reduce the likelihood of leaks or module failures, may generally contribute to lower manufacturing costs, and may provide for more accurate testing or calibration performance.

It should be appreciated that fluid distribution manifold 120 is described herein only for the purpose of explaining aspects of the present subject matter. For example, fluid distribution manifold 120 will be used herein to describe exemplary configurations, constructions, and methods of manufacturing fluid distribution manifold 120. It should be appreciated that the additive manufacturing techniques discussed herein may be used to manufacture other fluid manifolds for use in any suitable device, for any suitable purpose, and in any suitable industry. Thus, the exemplary components and methods described herein are used only to illustrate exemplary aspects of the present subject matter and are not intended to limit the scope of the present disclosure in any manner.

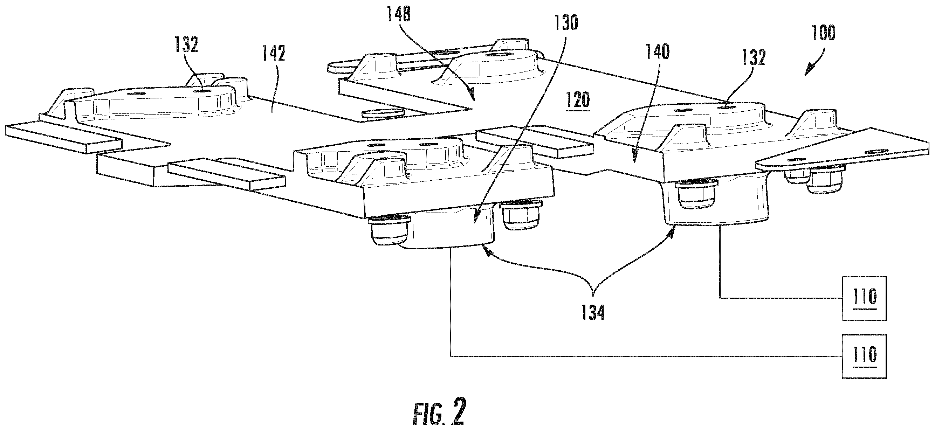

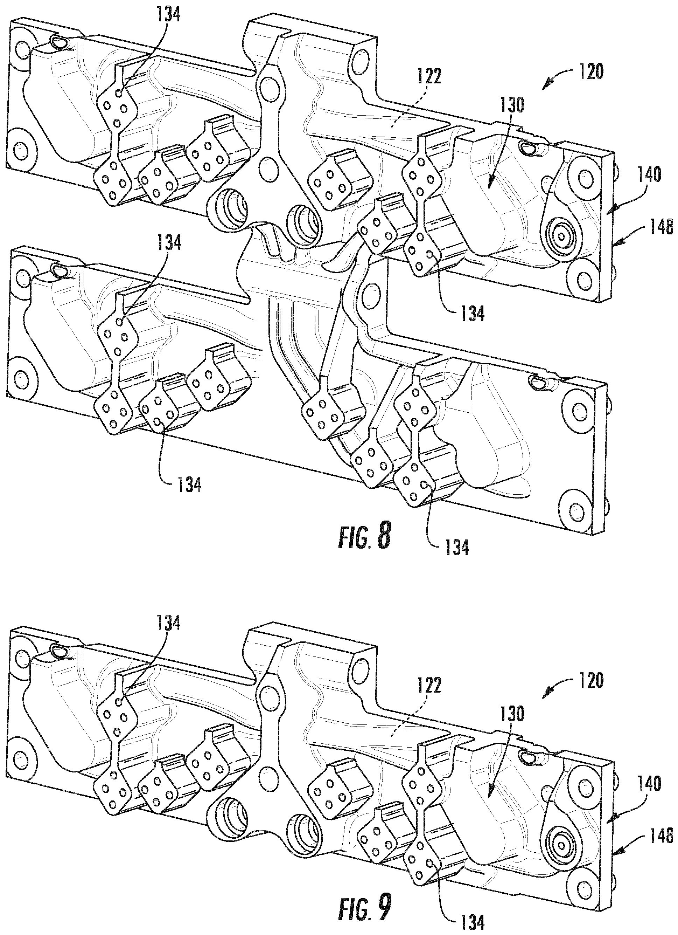

Although FIGS. 1 through 7 illustrate fluid distribution manifold 120 as having a three channel design, e.g., such that only three of the four arms of fluid distribution manifold 120 define sensing ports 132, control ports 134, air gap 146, and include heat element 180 for heating those arms, it should be appreciated that fluid distribution manifold 120 may have different configurations according to alternative embodiments. For example, as illustrated in FIG. 8, fluid distribution manifold 120 may include a four channel design that uses substantially the entire surface of fluid distribution manifold 120 to define at least one of sensing ports 132, control ports 134, air gap 146, etc. By contrast, as shown in FIG. 9, fluid distribution manifold may include only two channels, each channel defining sensing ports 132, control ports 134, air gap 146, and being covered entirely by heating element 180. Other configurations are possible and within the scope of the present subject matter.

Now that the construction and configuration of fluid distribution manifold 120 according to an exemplary embodiment of the present subject matter has been presented, an exemplary method 200 for forming a fluid distribution manifold according to an exemplary embodiment of the present subject matter is provided. Method 200 can be used by a manufacturer to form fluid distribution manifold 120, or any other suitable fluid manifold. It should be appreciated that the exemplary method 200 is discussed herein only to describe exemplary aspects of the present subject matter, and is not intended to be limiting.

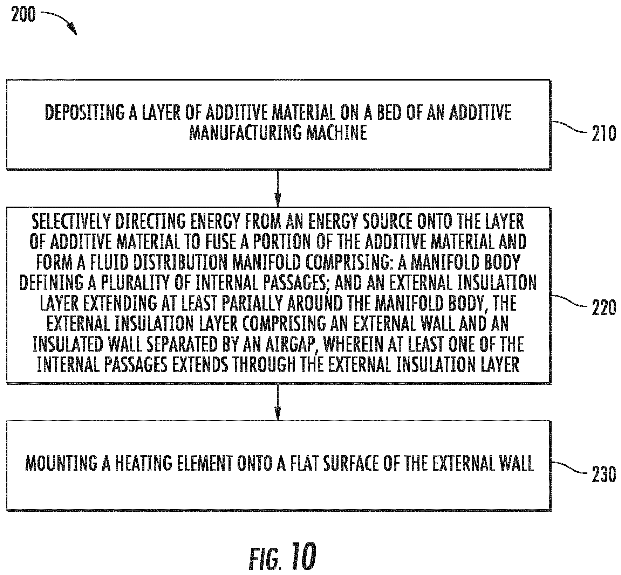

Referring now to FIG. 10, method 200 includes, at step 210, depositing a layer of additive material on a bed of an additive manufacturing machine. Step 220 includes selectively directing energy from an energy source onto the layer of additive material to fuse a portion of the additive material and form a fluid distribution manifold. Continuing the example from above, the additively manufactured fluid distribution manifold may be fluid distribution manifold 120. In this regard, the fluid distribution manifold may include a manifold body defining a plurality of internal passages and an external insulation layer extending at least partially around the manifold body. The external insulation layer may include an external wall and an insulated wall separated by an insulating airgap. In addition, a plurality of passage walls may extend through the airgap to define the internal passages and provide fluid communication between integrally formed sensing ports and control ports.

Other unique and innovative features may be defined in the fluid distribution manifold for improved test system performance. For example, step 230 includes mounting a heating element onto a flat surface of the external wall of the fluid distribution manifold. In this manner, the fluid distribution manifold may be heated when operating in cold environments, thereby reducing the likelihood of freezing or other test system malfunctions.

FIG. 10 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure. Moreover, although aspects of method 200 are explained using fluid distribution manifold 120 as an example, it should be appreciated that these methods may be applied to manufacture any suitable fluid distribution manifold.

A fluid distribution manifold and a method for additively manufacturing that fluid distribution manifold are described above. Notably, fluid distribution manifold 120 may generally include performance-enhancing geometries and flow passages whose practical implementations are facilitated by an additive manufacturing process, as described herein. For example, using the additive manufacturing methods described herein, fluid distribution manifold 120 may include insulating airgaps for improved thermal regulation and internal passages for optimizing the flow of test air. These features may be introduced during the design of the fluid distribution manifold, such that they may be easily integrated into the fluid distribution manifold during the build process at little or no additional cost. Moreover, the entire fluid distribution manifold, including the airgaps, internal support structures, internal passages, connection ports, and all other features can be formed integrally as a single monolithic component.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An additively manufactured fluid distribution manifold comprising:
a manifold body defining a plurality of internal passages; and
an insulation layer extending at least partially around the manifold body, the insulation layer comprising an external wall and an insulated wall separated by a gap, wherein at least one of the internal passages extends through the insulation layer.

2. The fluid distribution manifold of claim 1, wherein the insulation layer is defined on an external portion of the manifold body.

3. The fluid distribution manifold of claim 1, comprising:
a passage wall that extends through the gap and defines at least one internal passage, wherein the passage wall defines a fillet between the passage wall and at least one of the insulated wall and the external wall.

4. The fluid distribution manifold of claim 1, wherein the gap defines a gap thickness and the internal passages each define a passage thickness, the gap thickness being substantially equivalent to the passage thickness.

5. The fluid distribution manifold of claim 1, wherein at least one of the plurality of internal passages extends along the insulation layer.

6. The fluid distribution manifold of claim 1, wherein the external wall defines a flat surface, the fluid distribution manifold further comprising:
a heating element mounted onto the flat surface.

7. The fluid distribution manifold of claim 6, wherein the fluid distribution manifold is mounted within a manifold housing.

8. The fluid distribution manifold of claim 7, wherein the heating element is positioned between the external wall and the manifold housing.

9. The fluid distribution manifold of claim 7, wherein the manifold housing is a portable box and the fluid distribution manifold is part of a pitot static tube testing system.

10. The fluid distribution manifold of claim 1, comprising:
a plurality of test ports defined by the external wall, each of the test ports being in fluid communication with at least one of the internal passages and being configured for receiving a pitot static tube and calibration fluid.

11. The fluid distribution manifold of claim 1, comprising:
a plurality of sensing ports defined by the manifold body, each of the sensing ports being in fluid communication with at least one of the internal passages.

12. The fluid distribution manifold of claim 11, comprising:
a pressure transducer fluidly coupled to at least one of the plurality of sensing ports.

13. The fluid distribution manifold of claim 1, wherein the manifold body and the insulation layer are additively manufactured as a single monolithic component.

14. The fluid distribution manifold of claim 1, wherein the fluid distribution manifold comprises a plurality of layers formed by:
depositing a layer of additive material on a bed of an additive manufacturing machine; and
selectively directing energy from an energy source onto the layer of additive material to fuse a portion of the additive material.

15. A method of manufacturing a fluid distribution manifold, the method comprising:
depositing a layer of additive material on a bed of an additive manufacturing machine; and
selectively directing energy from an energy source onto the layer of additive material to fuse a portion of the additive material and form the fluid distribution manifold, the fluid distribution manifold comprising:
a manifold body defining a plurality of internal passages; and
an insulation layer extending at least partially around the manifold body, the insulation layer comprising an external wall and an insulated wall separated by a gap, wherein at least one of the internal passages extends through the insulation layer.

16. The method of claim 15, wherein the fluid distribution manifold comprises:
a passage wall that extends through the gap and defines at least one of the internal passages, wherein the passage wall defines a fillet between the passage wall and at least one of the insulated wall and the external wall.

17. The method of claim 15, wherein the external wall defines a flat surface, the method further comprising:
mounting a heating element onto the flat surface.

18. The method of claim 15, wherein the fluid distribution manifold comprises:
a plurality of test ports defined by the external wall, each of the test ports being in fluid communication with at least one of the internal passages and being configured for receiving a pitot static tube.

19. The method of claim 15, wherein the fluid distribution manifold comprises:
a plurality of sensing ports defined by the manifold body, each of the sensing ports being in fluid communication with at least one of the internal passages.

20. The method of claim 15, wherein the manifold body and the insulation layer are additively manufactured as a single monolithic component.
